# EUROPEAN PATENT APPLICATION

(11) **EP 4 557 388 A1**
(43) Date of publication of application: **21.05.2025**
(21) Application number: 23880100.5
(22) Date of filing: 11.10.2023
(51) Int. Cl.: H01M 4/04, B05C 11/10, B05C 5/02

(54) **METHOD FOR CONTROLLING SUPPLY AMOUNT OF ELECTRODE SLURRY AND APPARATUS THEREFOR**

(30) Priority: 19.10.2022 KR 20220134890; 10.10.2023 KR 20230134390
(71) Applicant: LG Energy Solution, Ltd., Seoul 07335 (KR)
(72) Inventor: SON, Wonho, Daejeon 34122 (KR); SON, Jun Ho, Daejeon 34122 (KR)
(74) Representative: Plasseraud IP
(86) International application number: PCT/KR2023/015564
(87) International publication number: WO 2024/085521

(57) **Abstract**

A method for controlling a supply amount of electrode slurry according to one embodiment of the present disclosure includes: supplying the slurry from a first tank to a coater; supplying the slurry from a second tank connected to the first tank to the first tank for a predetermined time, when the storage amount of the slurry in the first tank decreases and the level of the first tank reaches a first predetermined level; and automatically interrupting the supply of the slurry from the second tank to the first tank after the predetermined time has elapsed.

## Description

### [TECHNICAL FIELD]

### Cross Citation with Related Application(s)

This application claims the benefit of Korean Patent Application No. 10-2022-0134890 filed on October 19, 2022 and Korean Patent Application No. 10-2023-0134390 filed on October 10, 2023 in the Korean Intellectual Property Office, the disclosures of which are incorporated herein by reference in their entirety.

The present disclosure relates to a method for controlling a supply amount of electrode slurry and an apparatus therefor, and more particularly, to a method and apparatus for controlling a supply amount of electrode slurry supplied between tanks in order to prevent an excessive supply of electrode slurry and also minimize temperature changes in the supplied electrode slurry.

### [BACKGROUND]

Secondary batteries that are repeatedly chargeable and dischargeable are used in various electronic devices. On the other hand, as types and shapes of electronic devices have become diverse, secondary batteries mounted on electronic devices have also been diversified in shape. Recently, lithium ion secondary batteries using lithium have been frequently used as secondary batteries.

In order to manufacture such a secondary battery, a negative electrode coated with a negative electrode active material, a positive electrode coated with a positive electrode active material, a separator disposed between the negative electrode and the positive electrode, etc. are required. Particularly, in order to prepare the negative electrode active material and the positive electrode active material, a mixture of an electrode active material, a conductive agent, a binder, and the like, which is called slurry, is often required.

Specifically, in order to manufacture a positive electrode and a negative electrode, processes such as coating, drying, roll pressing, taping, and slitting, including a mixing process of mixing raw materials, are performed. In the mixing process, which mixes raw materials such as electrode active materials, conductive agents, and binders to create slurry in a uniform state, the heat of mixing is generated to gradually increase the temperature of the slurry, and then the slurry passes through multiple tanks during the transportation process, which is accompanied by a process of adjusting the slurry temperature to the desired temperature through cooling water. The slurry formed in the mixer is transferred through a storage tank, a transfer tank, etc., and finally to a supply tank that supplies slurry to a coating roll.

At this time, the temperature of the slurry affects the coating quality, loading deviation, etc. during the coating process, and thus, controlling the temperature to an appropriate level is very important to ensure s constant quality of the electrode. In order to adjust the slurry temperature, it is common to rotate an impeller inside the tank and supply cooling water to a wall surface of the tank, thereby transferring heat to the outside. At this time, the temperature of the supplied coolant is adjusted to match the slurry temperature to the target temperature, wherein a temperature control system using PID control (Proportional Integral Derivative Control) or a proportional control system using the difference between the target temperature and the current temperature can be used.

Electrode coating is performed continuously, but mixing of the slurry is performed together at a time, so that the temperature of the slurry being transported has a profile in which periodic high and low parts are repeated. At this time, in the case of a section where the temperature changes rapidly, if a proportional control type temperature adjustment is used, the time required to stabilize the slurry to the target temperature may be excessively long. In this case, it may affect the yield of products with desired physical properties, and may cause a partial stoppage of the process to stabilize the temperature of the slurry, which may lead to a decrease in production volume.

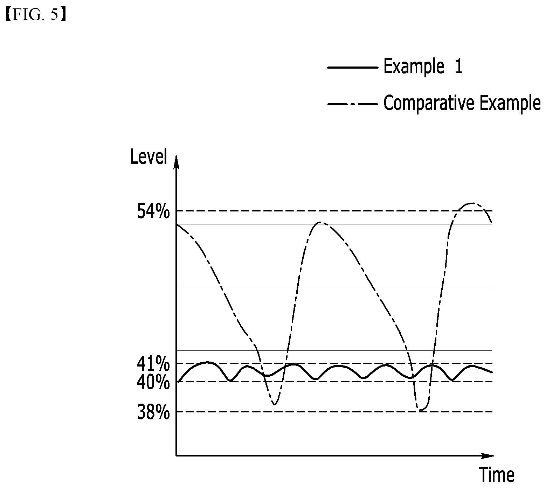

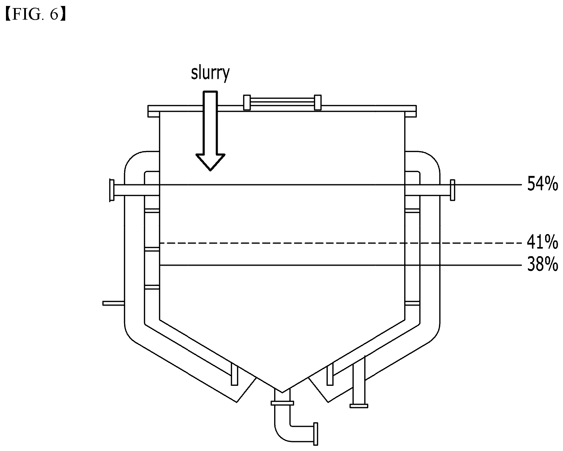

Referring to FIG. 6, according to the prior art, in order to maintain the target level (e.g., 41%) for slurry storage in the supply tank, the slurry supply is started at a level (e.g., 40%) lower than the target level, and when the target level (e.g., 41%) is reached again, the slurry supply from the transfer tank is interrupted. However, due to the length of the pipe between the supply tank and the transfer tank, if the slurry supply is interrupted at the target level, the slurry is excessively supplied compared to the desired target level. Further, if the slurry supply from the transfer tank is started at a level (e.g., 40%) lower than the target level, due to the length of the pipe between the supply tank and the transfer tank, while the slurry is being transferred from the transfer tank, the slurry is continuously supplied to the coating roll from the supply tank, so that the level of the supply tank is further lowered. Therefore, the disturbance becomes large as in the case of the comparative example illustrated in FIG. 5.

Therefore, in order to prevent an excessive supply of slurry and stabilize the temperature of the slurry, more efficient automatic control of the supply amount of slurry between these tanks is required.

### [DETAILED DESCRIPTION OF THE INVENTION]

### [Technical Problem]

It is an object of the present disclosure to improve the conventional electrode slurry supply system to prevent an excessive supply of the slurry, and also minimize temperature changes in the slurry, thereby improving manufacturing efficiency and product quality.

However, the technical problems to be solved by the embodiments of the present disclosure are not limited to the above-described problems, and can be variously expanded within the scope of the technical idea included in the present disclosure.

### [Technical Solution]

According to one embodiment of the present disclosure, there is provided a method for controlling a supply amount of electrode slurry, the method comprising: supplying the slurry from a first tank to a coater; supplying the slurry from a second tank connected to the first tank to the first tank for a predetermined time, when a storage amount of the slurry in the first tank decreases and a level of the first tank reaches a first predetermined level; and automatically interrupting the supply of the slurry from the second tank to the first tank after the predetermined time has elapsed.

The method may further comprise supplying the slurry from the second tank again to the first tank for the predetermined time, when the level of the first tank again reaches the first predetermined level.

The first predetermined level may be a target level of the storage amount of the slurry in the first tank.

The method may further comprise interrupting the supply of the slurry from the second tank to the first tank, when a level of the first tank reaches the second predetermined level while supplying the slurry from the second tank to the first tank for the predetermined time, wherein the second predetermined level may be a value that is higher than the first predetermined level and lower than the upper limit level of the storage amount of the slurry in the first tank.

The level of the first tank may be the height or volume of the first tank.

A slurry storage capacity of the slurry in the first tank may be smaller than a slurry storage capacity of the second tank.

According to another embodiment of the present disclosure, there is provided a method for controlling a supply amount of electrode slurry, the method comprising the steps of: measuring atemperature of a first tank; measuring a temperature of a second tank; and controlling the supply amount of the slurry from the second tank to the first tank in accordance with the temperature of the first tank and the temperature of the second tank.
the step of controlling the supply amount of the slurry from the second tank to the first tank comprises increasing the supply amount of the slurry from the second tank to the first tank, when the temperature of the first tank corresponds to a predetermined normal temperature range and the temperature of the second tank corresponds to the predetermined normal temperature range.

The step of controlling the supply amount of the slurry from the second tank to the first tank may comprise maintaining the supply amount of the slurry from the second tank to the first tank, when the temperature of the first tank corresponds to a predetermined normal temperature range and the temperature of the second tank is higher or lower than the predetermined normal temperature range.

The step of controlling the supply amount of the slurry from the second tank to the first tank may comprise increasing the supply amount of the slurry from the second tank to the first tank, when the temperature of the first tank is higher or lower than a predetermined normal temperature range and the temperature of the second tank corresponds to the predetermined normal temperature range.

The step of controlling the supply amount of the slurry from the second tank to the first tank may comprise increasing the supply amount of the slurry from the second tank to the first tank, when the temperature of the first tank is higher than a predetermined normal temperature range and the temperature of the second tank is lower than the predetermined normal temperature range.

The step of controlling the supply amount of the slurry from the second tank to the first tank may comprise increasing the supply amount of the slurry from the second tank to the first tank, when the temperature of the first tank is lower than a predetermined normal temperature range and the temperature of the second tank is higher than the predetermined normal temperature range.

The step of controlling the supply amount of the slurry from the second tank to the first tank may comprise maintaining the supply amount of the slurry from the second tank to the first tank, when the temperature of the first tank is higher than a predetermined normal temperature range and the temperature of the second tank is higher than the predetermined normal temperature range.

The step of controlling the supply amount of the slurry from the second tank to the first tank may comprise maintaining the supply amount of the slurry from the second tank to the first tank, when the temperature of the first tank is lower than a predetermined normal temperature range and the temperature of the second tank is lower than the predetermined normal temperature range.

The predetermined normal temperature range may be a temperature range previously set so as to be suitable for slurry coating.

According to yet another embodiment of the present disclosure, there is provided an electrode slurry supply apparatus that performs the control method, the apparatus comprising: a coater that coats the slurry; a first tank that supplies the slurry to the coater; a second tank that stores the slurry and supplies it to the first tank; a pipe that connects the first tank and the second tank; and a valve provided in the pipe.

### [Advantageous Effects]

According to the present disclosure, the amount of slurry supplied between tanks can be automatically controlled and the excessive supply of slurry can be effectively prevented. In addition, the amount of slurry supplied between tanks can be adjusted in real time in accordance with the temperature of respective tanks, thereby minimizing temperature changes of slurry, stabilizing the temperature of the slurry, and maximizing the production efficiency of the electrode assembly.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a cross-sectional view schematically illustrating the movement path of slurry in the electrode manufacturing process.
FIG. 2 is a diagram illustrating a process of discharging electrode slurry through an electrode slurry slot die on an electrode current collector located on a coating roller.
FIG. 3 is a flowchart illustrating a method for controlling a supply amount of electrode slurry according to an embodiment of the present disclosure.
FIG. 4 schematically illustrates an algorithm for controlling the supply amount of electrode slurry in accordance with the temperature according to another embodiment of the present disclosure.
FIG. 5 shows the results of comparative experimental data between the level change in the supply tank according to one embodiment of FIG. 3 and the level change in the supply tank according to the prior art of FIG. 6.
FIG. 6 illustrates the level change in the supply tank according to the prior art.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

A description of portions that are irrelevant to the description will be omitted for clarity, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not necessarily mean the certain part "above" or "on" toward an opposite direction of gravity.

Further, throughout the specification, when a portion is referred to as "including" or "comprising" a certain component, it means that the portion can further include other components, without excluding the other components, unless otherwise stated.

Further, throughout the specification, when it is referred to as "planar", it means when a target portion is viewed from the upper side, and when it is referred to as "cross-sectional", it means when a target portion is viewed from the side of a cross section cut vertically.

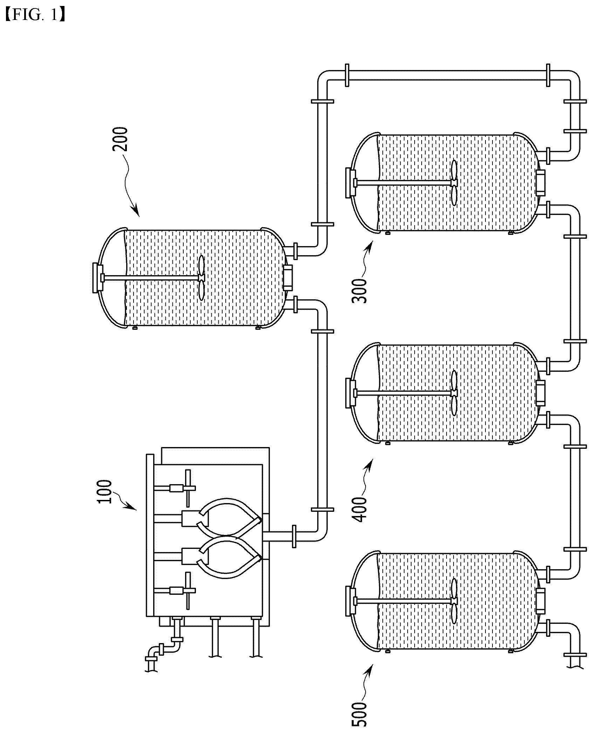

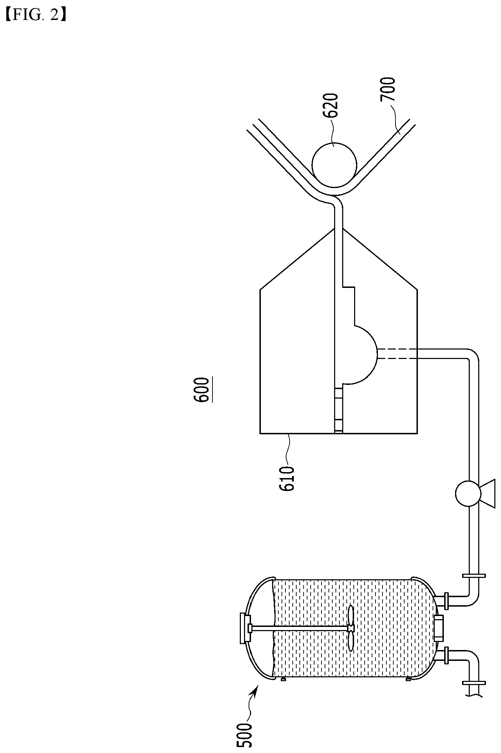

FIG. 1 is a cross-sectional view schematically illustrating the movement path of slurry in the electrode manufacturing process. FIG. 2 illustrates an electrode slurry coater 600 connected to a supply tank 500 of FIG. 1. The apparatuses of FIGS. 1 and 2 are used to implement The method for controlling a supply amount of electrode slurry of the present disclosure.

First, referring to FIG. 1, an electrode active material, a conductive agent, a binder, and the like may be mixed in a mixer 100 to prepare a slurry. That is, the slurry is a slurry for electrode production, and may include an electrode active material. This slurry can be moved to a storage tank 200, a buffer tank 300, a transfer tank 400, and a supply tank 500 in this order. A transfer pipe may be provided to allow the slurry to move between respective tanks.

The storage tank 200 is a tank in which the slurry mixed and discharged from the mixer 100 is temporarily stored. The buffer tank 300 and the transfer tank 400 are tanks provided between the storage tank 200 and the supply tank 500 in order to continuously provide slurry produced in one unit to the supply tank 500. The supply tank 500 is a tank for supplying slurry to a coater 600. Depending on the environment in which the invention is implemented, the storage tank 200 and/or the buffer tank 300 may be optionally omitted.

Although not specifically illustrated in FIG. 1, respective tanks 200, 300, 400 and 500 further includes a temperature sensor (not shown). A control valve (not shown) that receives the temperature value of the electrode slurry measured by the temperature sensor and controls the flow rate of the electrode slurry is provided in the pipe between respective tanks 200, 300, 400 and 500. Each control valve receives the temperature value of the electrode slurry measured by the temperature sensor and controls the flow rate from the front stage tank to the rear stage tank for each section. In addition, the pipe between respective tanks 200, 300, 400 and 500 further includes a pump (not shown) that pumps the electrode slurry from the front stage tank to the rear stage tank.

The slurry storage capacity of the supply tank 500 may be smaller than the slurry storage capacity of the transfer tank 400. When the slurry storage capacity of the supply tank 500 is , for example, 500L, 200L or 120L, the slurry storage capacity of the transfer tank 400 may be, for example, 800L. The present disclosure is not limited to those described above, and the capacity of the supply tank 500 and the capacity of the transfer tank 400 can be variously modified and changed in accordance with the environment in which the invention is implemented.

FIG. 2 illustrates an electrode slurry coater 600 connected to a supply tank 500 of FIG. 1. The electrode slurry coater 600 includes an electrode slurry slot die 610 that discharges the electrode slurry supplied from the supply tank 500 and a coating roll 620 that supports and transfers a current collector layer 700. Further, the electrode slurry coater 600 further includes a temperature sensor (not shown) that measures the temperature of the electrode slurry discharged from the electrode slurry slot die 610. The current collector layer 700 is transferred along the coating roll 620, but the electrode slurry discharged from the electrode slurry slot die 610 is coated onto the current collector layer 700 on one or both sides. After the electrode slurry is coated onto the current collector 700, processes such as drying and roll pressing may be performed.

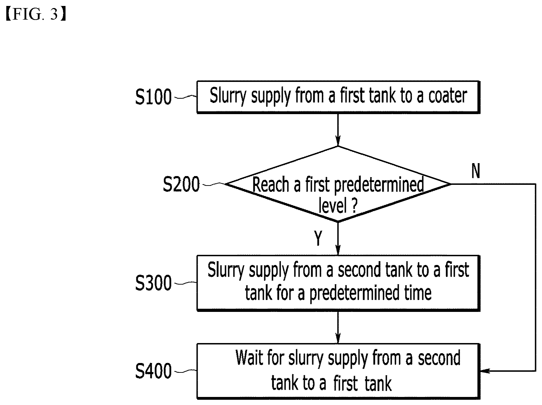

FIG. 3 is a flowchart illustrating a method for controlling a supply amount of electrode slurry according to an embodiment of the present disclosure.

Slurry is supplied from the supply tank 500 to the coater 600 (S100). At this time, as the slurry is supplied from the supply tank 500 to the coater 600, the amount of slurry stored in the supply tank 500 gradually decreases. The amount of slurry stored in the supply tank 500 is expressed as a level (percentage), assuming that the total volume of the supply tank 500 or the total height of the supply tank 500 is 100, and based thereon.

It is determined whether the storage amount of slurry in the supply tank 500 decreases and the level of the supply tank 500 reaches a first predetermined level (S200). When the storage amount of slurry in the supply tank 500 decreases and the level of the supply tank 500 reaches the first predetermined level, slurry is supplied to the supply tank 500 from a transfer tank 400 connected to the supply tank 500 for a predetermined time (S300). The time for supplying slurry from the transfer tank 400 to the supply tank 500 is a time previously set in accordance with the environment in which the invention is implemented. The time may be, for example, 3 seconds. However, the present disclosure is not limited thereto, the time for supplying slurry from the transfer tank 400 to the supply tank 500 can be selected and previously set in accordance with the type of electrode slurry, the capacity of the transfer tank 400 and/or the supply tank 500, the length of the pipe connecting the transfer tank 400 and the supply tank 500, etc.

The first predetermined level of the supply tank 500 is a level at which supply from the transfer tank 400 to the supply tank 500 is started. The first predetermined level is a level previously set by an operator during the process, and may be a target level for the storage amount of slurry in the supply tank 500. That is, the level may be a level at which an appropriate amount is stored in the supply tank 500 during the process, and can be modified, changed, and predetermined in accordance with the environment in which the invention is implemented.

The first predetermined level is selected between the upper limit level and the lower limit level of the storage amount of slurry in the supply tank 500. The lower limit level of the storage amount of slurry in the supply tank 500 means a lower limit set to prevent a situation in which additional slurry needs to be supplied from the transfer tank 400, because the storage amount of the supply tank 500 may decrease, and a problem may occur in the process when the electrode slurry is supplied from the supply tank 500 to the coater 600. Similarly, an upper limit level of slurry storage in supply tank 500 is also present, which means an upper limit set to prevent slurry from being excessively supplied to the supply tank 500. The lower limit level and upper limit level may also be levels previously set by an operator in accordance with the capacity, conditions, etc. of the supply tank 500 in the corresponding process.

On the other hand, at a level where the storage amount of slurry of the supply tank 500 is less than the target level, if the valve between the supply tank 500 and the transfer tank 400 is turned on and opened in order to adjust the storage amount of slurry in the supply tank 500 to the target level, it takes a time for the slurry to move due to the length of the pipe between the supply tank 500 and the transfer tank 400, so that slurry is not immediately supplied to the supply tank 500. Therefore, the first predetermined level of the supply tank 500 that turns on and opens the valve between the supply tank 500 and the transfer tank 400 may be a target level of slurry storage in the supply tank 500. However, the present disclosure is not necessarily limited thereto, and an operator may previously set the first predetermined level in accordance with the environment to which the invention is applied.

The important point is that when the storage amount of slurry in the supply tank 500 reaches a first predetermined level, a process of turning on and opening the valve between the supply tank 500 and the transfer tank 400 and supplying slurry from the transfer tank 400 to the supply tank 500 only for the predetermined time as described above is performed. When the predetermined time has elapsed, the supply of slurry from the transfer tank 400 to the supply tank 500 is automatically interrupted (S400).

Therefore, even if the valve between the supply tank 500 and the transfer tank 400 is turned off and closed, it takes a time for the slurry to move to the supply tank 500 due to the length of the pipe between the supply tank 500 and the transfer tank 400. For this reason, it is possible to prevent the problem that slurry is continuously fed into the supply tank 500 that has already reached the upper limit level.

Therefore, when the predetermined time has elapsed, the supply of slurry from the transfer tank 400 to the supply tank 500 is automatically interrupted, which prevents in advance the possibility that slurry is continuously fed to the supply tank 500 to cause disturbances. When the level of the supply tank 500 reaches the first predetermined level again as described above, the step (S300) of supplying the slurry from the transfer tank 400 to the supply tank 500 for a predetermined time is repeated. Similarly, when the predetermined time has elapsed, the supply of slurry from the transfer tank 400 to the supply tank 500 is automatically interrupted (S400).

Of course, when supplying slurry from the transfer tank 400 to the supply tank 500 (S300), if the level of the supply tank 500 reaches the second predetermined level even if the predetermined time has not elapsed, the method further comprises interrupting supply of slurry from the transfer tank 400 to the supply tank 500. The second predetermined level may be previously set to a value that is higher than the first predetermined level and lower than the upper limit level of the storage amount of slurry in the supply tank 500.

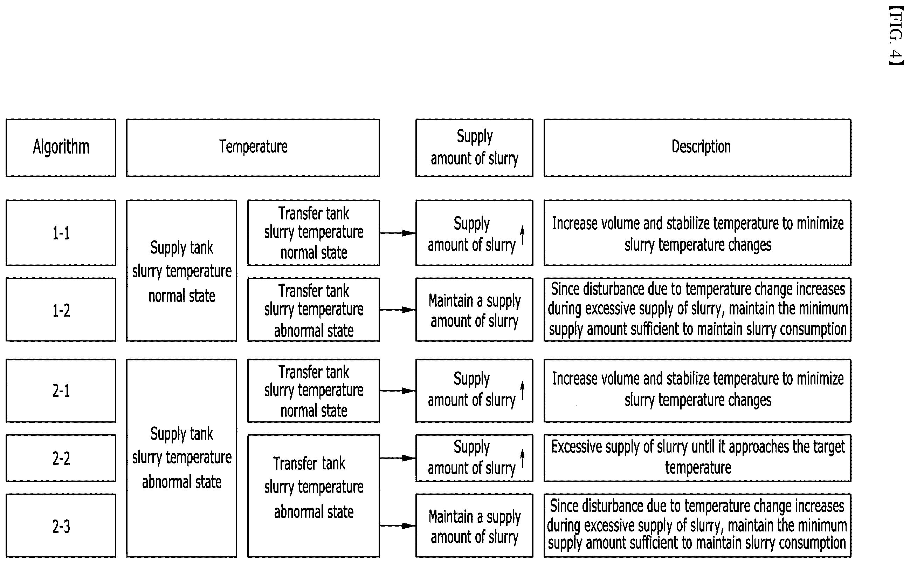

FIG. 4 schematically illustrates an algorithm for controlling the supply amount of electrode slurry in accordance with the temperature according to another embodiment of the present disclosure. More specifically, this is an algorithm that controls the amount of slurry supplied from the transfer tank 400 to the supply tank 500 in accordance with the temperature of the transfer tank 400 and the temperature of the supply tank 500. When the temperature difference between the transfer tank 400 and the supply tank 500 is large, the level of the supply tank 500 is lowered to facilitate temperature changes, or a minimum level of supply is provided to reduce disturbance. This is an algorithm that gradually increases the amount supplied to the supply tank 500 (that is, increases the slurry volume at the same temperature) when the temperature deviation is small, thereby reducing the influence of disturbances in the future.

First, the method for controlling the supply amount of electrode slurry according to the present disclosure further comprises a step of measuring the temperature of the supply tank 500 and a step of measuring the temperature of the transfer tank 400.

Further, the step (S300) of supplying slurry from the transfer tank 400 to the supply tank 500 for a predetermined time comprises a step of controlling the supply amount of slurry from the transfer tank 400 to the supply tank 500 in accordance with the temperature of the supply tank 500 and the temperature of the transfer tank 400. At this time, in step S300, it is determined whether the temperature of the supply tank 500 and the temperature of the transfer tank 400 each fall within a predetermined normal temperature range.

Herein, the predetermined normal temperature range means the target temperature range previously set by an operator in the electrode manufacturing process. For example, if the temperature of the slurry falls within the corresponding normal temperature range (target temperature range), it refers to the temperature range desired by the operator, such as keeping the quality of the electrode constant and reducing the defective rate. The predetermined normal temperature range can be modified or changed and previously determined in accordance with the environment in which the invention is implemented.

The specific algorithm for controlling the amount of slurry supplied from the transfer tank 400 to the supply tank 500 at this time is as follows.

1-1. When the temperature of the supply tank 500 corresponds to a predetermined normal temperature range and the temperature of the transfer tank 400 corresponds to a predetermined normal temperature range, the supply amount of slurry from the transfer tank 400 to the supply tank 500 is increased.

In other words, when both the temperature of the supply tank 500 and the temperature of the transfer tank 400 fall within the normal temperature range, the amount of slurry supplied from the transfer tank 400 to the supply tank 500 is increased, which makes it possible to hold more slurry in a normal state in the supply tank 500 directly connected to the coater 600.

1-2. When the temperature of the supply tank 500 corresponds to a predetermined normal temperature range and the temperature of the transfer tank 400 is higher or lower than the predetermined normal temperature range, the supply amount of slurry from the transfer tank 400 to the supply tank 500 is maintained. In other words, if more slurry at an abnormal temperature is supplied to the supply tank 500 than necessary, disturbance caused by temperature changes of the slurry increases, and accordingly, the supply amount is maintained at a minimum amount sufficient to maintain slurry consumption in the supply tank 500.

At this time, if the slurry is not supplied from the transfer tank 400 to the supply tank 500 even if the temperature of the transfer tank 400 does not fall within the normal temperature range, a problem may occur during the process of supplying slurry from the supply tank 500 to the coater 600 to coat the electrode slurry. Further, according to the present disclosure, the slurry is not supplied indefinitely from the transfer tank 400 to the supply tank 500, but is supplied only for a predetermined time as described above. The slurry supplied from the transfer tank 400 to the supply tank 500 is combined with the slurry previously stored in the supply tank 500, and thus, the temperature change in the supply tank 500 may not be relatively large.

2-1. When the temperature of the supply tank 500 is higher or lower than the predetermined normal temperature range and the temperature of the transfer tank 400 corresponds to the predetermined normal temperature range, the supply amount of slurry from the transfer tank 400 to the supply tank 500 is increased. In other words, even if the temperature of the supply tank 500 falls within the abnormal temperature range, the amount of slurry supplied from the transfer tank 400 falling within the normal temperature range can be increased, so that the temperature of the slurry in the supply tank 500 can be changed toward a relatively normal temperature range.

2-2. (a) When the temperature of the supply tank 500 is higher than the predetermined normal temperature range and the temperature of the transfer tank 400 is lower than the predetermined normal temperature range, the supply amount of slurry from the transfer tank 400 to the supply tank 500 is increased. In other words, the temperature of the slurry stored in the supply tank 500 and the temperature of the slurry supplied from the transfer tank 400 offset each other to become an equilibrium state, thereby making it possible to stabilize the temperature of the slurry in the supply tank 500.

2-2. (b) When the temperature of the supply tank 500 is lower than the predetermined normal temperature range and the temperature of the transfer tank 400 is higher than the predetermined normal temperature range, the supply amount of slurry from the transfer tank 400 to the supply tank 500 is increased. In other words, the temperature of the slurry stored in the supply tank 500 and the temperature of the slurry supplied from the transfer tank 400 offset each other to become an equilibrium state, thereby making it possible to stabilize the temperature of the slurry in the supply tank 500.

2-3. (a) When the temperature of the supply tank 500 is higher than the predetermined normal temperature range and the temperature of the transfer tank 400 is higher than the predetermined normal temperature range, the supply amount of slurry from the transfer tank 400 to the supply tank 500 is maintained. In other words, if more slurry at an abnormal temperature is supplied to the supply tank 500 than necessary, disturbance due to temperature changes of the slurry increases, thus the supply amount is maintained at a minimum amount sufficient to maintain the slurry consumption in the supply tank 500.

2-3. (b) When the temperature of the supply tank 500 is lower than the predetermined normal temperature range and the temperature of the transfer tank 400 is lower than the predetermined normal temperature range, the supply amount of slurry from the transfer tank 400 to the supply tank 500 is maintained. In other words, if more slurry at an abnormal temperature is supplied to the supply tank 500 than necessary, disturbance caused by temperature changes of the slurry increases, thus the supply amount is maintained at a minimum amount sufficient to maintain the slurry consumption in the supply tank 500.

In the cases of 2-3 (a) and (b), because the temperature of the transfer tank 400 does not fall within the normal temperature range as described above in case 1-2, if the slurry is not supplied from the transfer tank 400 to the supply tank 500, a problem may occur during the process of supplying the slurry from the supply tank 500 to the coater 600 to coat the electrode slurry. Therefore, the supply amount is maintained at a minimum amount sufficient to maintain the slurry consumption in the supply tank 500.

The predetermined normal temperature range is a temperature range previously set so as to be suitable for slurry coating, and may be previously set in various ways depending on the environment in which the invention is implemented and the type of slurry.

In one embodiment, the predetermined normal temperature range may be set within the range of 23 to 33°C, for example. Alternatively, the predetermined normal temperature range may be set within the range of 23 to 26°C, for example, 23°C.

On the other hand, the electrode to be manufactured in the present disclosure is an electrode for a secondary battery. In addition, the electrode slurry generally refers to the composition of the slurry state containing the electrode active material. The positive electrode or the negative electrode refers to an electrode for a secondary battery, and specifically, refers to an electrode for a lithium secondary battery.

In one embodiment, the electrode refers to a positive electrode and/or a negative electrode of a lithium secondary battery.

The positive electrode has a structure in which a two-layered positive electrode active material layer is laminated on a positive electrode current collector. In one example, the positive electrode active material layer includes a positive electrode active material, a conductive material, and a binder polymer, and, if necessary, may further include a positive electrode additive commonly used in the art.

The positive electrode active material may be a lithium-containing oxide and may be the same or different. As the lithium-containing oxide, a lithium-containing transition metal oxide can be used.

For example, lithium-containing transition metal oxides may be any one selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3) or a mixture of two or more of them. The lithium-containing transition metal oxide may be coated with a metal such as aluminum (Al) or a metal oxide. Further, in addition to the lithium-containing transition metal oxide, one or more types selected from the group consisting of sulfide, selenide, halide, and the like can also be used.

The positive electrode active material may be contained in the range of 94.0 to 98.5% by weight in the positive electrode active material layer. When the content of the positive electrode active material satisfies the above range, it is advantageous in terms of manufacturing a high-capacity battery and providing sufficient conductivity of the positive electrode or adhesive force between electrode materials.

The current collector used for the positive electrode is a highly conductive metal, and any metal can be used as long as it is a metal to which the positive electrode active material slurry can be easily adhered and is not reactive within the voltage range of the electrochemical device. Specifically, non-limiting examples of the positive electrode current collector include foil made of aluminum, nickel, or a combination thereof.

The positive electrode active material layer further includes a conductive material. The conductive material is typically added in an amount of 1 to 30% by weight based on the total weight of the mixture containing the positive electrode active material. Such a conductive material can be used without particular limitation as long as it has high conductivity without causing a chemical change in the secondary battery. For example, the conductive material may include one or more types selected from the group consisting of graphite such as natural graphite or artificial graphite; carbon blacks such as carbon black, acetylene black, ketjen black, channel black, furnace black, lamp black, and thermal black; conductive fibers such as carbon fiber and metal fiber; metal powders such as carbon fluoride, aluminum, and nickel; conductive whiskey such as zinc oxide and potassium titanate; conductive metal oxides such as titanium oxide; polyphenylene derivatives.

The negative electrode has a structure in which a two-layered negative electrode active material layer is laminated on a negative electrode current collector. **In** one example, the negative electrode active material layer includes a negative electrode active material, a conductive material, and a binder polymer, and, if necessary, may further include a negative electrode additive commonly used in the art.

The negative electrode active material may include carbon material, lithium metal, silicon, tin, and the like. When a carbon material is used as a negative electrode active material, both low-crystalline carbon and high-crystalline carbon can be used. Typical examples of low-crystalline carbon include soft carbon and hard carbon. Typical examples of the high-crystalline carbon includes one or more types of high temperature fired carbons selected from the group consisting of natural graphite, artificial graphite, kish graphite, pyrolytic carbon, mesophase pitch-based carbon fiber, meso-carbon microbeads, mesophase pitches and petroleum or coal tar pitch derived cokes, and the like.

Non-limiting examples of the current collector used in the negative electrode include foil made of copper, gold, nickel, or copper alloy, or a combination thereof. Further, the current collector may be used by laminating substrates made of the above materials.

Further, the negative electrode may include a conductive material and a binder commonly used in the art.

FIG. 5 shows the results of comparative experimental data between the level change in the supply tank according to one embodiment (Example 1) of FIG. 3 and the level change in the supply tank according to the prior art of FIG. 6.

In the graph of FIG. 5, the solid line is a graph showing the level change of the supply tank 500 according to Example 1 of the present disclosure, and the dotted line is a comparative example and illustrates a graph showing the level change of the supply tank 500 according to the prior art.

In both Example 1 and Comparative Example, in the case of the positive electrode slurry, the corresponding experiments were carried out when the storage capacity of the transfer tank 400 was about 800 L and the storage capacity of the supply tank 500 was about 120 L.

As described above with reference to FIG. 3, Example 1 of the present disclosure corresponds to a case where slurry is supplied from the transfer tank 400 to the supply tank 500 for a predetermined period of 3 seconds, then the supply is interrupted, and this is repeated. Comparative examples correspond to cases described as prior art in the Background Art.

As can be seen from the comparison graph in FIG. 5, if the stable target level of the supply tank 500 is 41%, in Example 1 of the present disclosure, the level of the supply tank 500 is maintained at a constant level without significant variation within the range of 40% to 41% (i.e., within the range of 1%) to stably perform the electrode coating process, whereas in the Comparative Example, the level of the supply tank 500 varies within the range of 38% to 54% (i.e., within the range of 16%) to a greater extent than that of Example 1. Accordingly, the change in temperature (disturbance) according to the level of the supply tank 500 was about 0.2°C in the comparative example, but was greatly and stably improved to about 0.01°C in Example 1.

According to the method for controlling a supply amount of electrode slurry according to an embodiment of the present disclosure, by improving the conventional electrode slurry supply method, when a previously set level is reached, the slurry is supplied only for a predetermined time and then interrupted, and then when the previously set level is reached again, a process in which the slurry is supplied only for a predetermined time and then interrupted is repeated, thereby preventing an excessive supply of the slurry and minimizing the resulting temperature change in the slurry.

Additionally, by adjusting the amount of slurry supplied from the transfer tank to the supply tank in real time in accordance with the respective temperatures of the supply tank and the transfer tank, it is possible to minimize temperature changes of the slurry in the supply tank connected to the electrode coater and stabilize the temperature of the slurry.

Due to the above-mentioned advantages, it is possible to maximize the production efficiency of the electrode assembly and thus improve the manufacturing efficiency and product quality.

Although preferred embodiments of the present disclosure have been described in detail above, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: mixer
200: storage tank
300: buffer tank
400: transfer tank
500: supply tank
600: coater
700: current collector layer

## Claims

1. A method for controlling a supply amount of electrode slurry, the method comprising:
supplying the slurry from a first tank to a coater;
supplying the slurry from a second tank connected to the first tank to the first tank for a predetermined time, when a storage amount of the slurry in the first tank decreases and a level of the first tank reaches a first predetermined level; and
automatically interrupting the supply of the slurry from the second tank to the first tank after the predetermined time has elapsed.

2. The method for controlling a supply amount of electrode slurry according to claim 1, further comprising:
supplying the slurry from the second tank again to the first tank for the predetermined time, when the level of the first tank again reaches the first predetermined level.

3. The method for controlling a supply amount of electrode slurry according to claim 1, wherein:
the first predetermined level is a target level of the storage amount of the slurry in the first tank.

4. The method for controlling a supply amount of electrode slurry according to claim 1, further comprising:
interrupting the supply of the slurry from the second tank to the first tank, when the level of the first tank reaches a second predetermined level while supplying the slurry from the second tank to the first tank for the predetermined time,
wherein the second predetermined level is a value that is higher than the first predetermined level and lower than the upper limit level of the storage amount of the slurry in the first tank.

5. The method for controlling a supply amount of electrode slurry according to claim 1, wherein:
the level of the first tank is the height or volume of the first tank.

6. The method for controlling a supply amount of electrode slurry according to claim 1, wherein:
a slurry storage capacity of the first tank is smaller than a slurry storage capacity of the second tank.

7. A method for controlling a supply amount of electrode slurry, the method comprising the steps of:
measuring a temperature of a first tank;
measuring a temperature of a second tank; and
controlling the supply amount of the slurry from the second tank to the first tank in accordance with the temperature of the first tank and the temperature of the second tank.

8. The method for controlling a supply amount of electrode slurry according to claim 7, wherein:
the controlling the supply amount of the slurry from the second tank to the first tank comprises,
increasing the supply amount of the slurry from the second tank to the first tank, when the temperature of the first tank corresponds to a predetermined normal temperature range and the temperature of the second tank corresponds to the predetermined normal temperature range.

9. The method for controlling a supply amount of electrode slurry according to claim 7, wherein:
the controlling the supply amount of the slurry from the second tank to the first tank comprises,
maintaining the supply amount of the slurry from the second tank to the first tank, when the temperature of the first tank corresponds to a predetermined normal temperature range and the temperature of the second tank is higher or lower than the predetermined normal temperature range.

10. The method for controlling a supply amount of electrode slurry according to claim 7, wherein:
the controlling the supply amount of the slurry from the second tank to the first tank comprises,
increasing the supply amount of the slurry from the second tank to the first tank, when the temperature of the first tank is higher or lower than a predetermined normal temperature range and the temperature of the second tank corresponds to the predetermined normal temperature range.

11. The method for controlling a supply amount of electrode slurry according to claim 7, wherein:
the controlling the supply amount of the slurry from the second tank to the first tank comprises,
increasing the supply amount of the slurry from the second tank to the first tank, when the temperature of the first tank is higher than a predetermined normal temperature range and the temperature of the second tank is lower than the predetermined normal temperature range.

12. The method for controlling a supply amount of electrode slurry according to claim 7, wherein:
the controlling the supply amount of the slurry from the second tank to the first tank comprises,
increasing the supply amount of the slurry from the second tank to the first tank, when the temperature of the first tank is lower than a predetermined normal temperature range and the temperature of the second tank is higher than the predetermined normal temperature range.

13. The method for controlling a supply amount of electrode slurry according to claim 7, wherein:
the controlling the supply amount of the slurry from the second tank to the first tank comprises,
maintaining the supply amount of the slurry from the second tank to the first tank, when the temperature of the first tank is higher than a predetermined normal temperature range and the temperature of the second tank is higher than the predetermined normal temperature range.

14. The method for controlling a supply amount of electrode slurry according to claim 7, wherein:
the controlling the supply amount of the slurry from the second tank to the first tank comprises,
maintaining the supply amount of the slurry from the second tank to the first tank, when the temperature of the first tank is lower than a predetermined normal temperature range and the temperature of the second tank is lower than the predetermined normal temperature range.

15. The method for controlling a supply amount of electrode slurry according to any one of claims 8 to 14, wherein:
the predetermined normal temperature range is a temperature range previously set so as to be suitable for slurry coating.

16. An electrode slurry supply apparatus that performs the control method according to claim 1 or 7, the apparatus comprising:
a coater that coats the slurry;
a first tank that supplies the slurry to the coater;
a second tank that stores the slurry and supplies it to the first tank;
a pipe that connects the first tank and the second tank; and
a valve provided in the pipe.
